# EUROPEAN PATENT SPECIFICATION

(11) **EP 1 496 739 B1**
(45) Date of publication and mention of the grant of the patent: **19.10.2005**
(21) Application number: 03721146.3
(22) Date of filing: 08.04.2003
(51) Int. Cl.: A01K 1/12, A01K 5/01

(54) **TILTABLE FEED TROUGH**
NEIGBARER FUTTERTROG
ORGANE D'ALIMENTATION TRAVERSANT INCLINABLE

(30) Priority: 08.04.2002 NL 1020333
(43) Date of publication of application: 19.01.2005
(73) Proprietor: Idento Electronics B.V., 8316 PV Marknesse (NL)
(72) Inventor: HOFMAN, Hendrik, NL-8531 PC Lemmer (NL); VAN DER SLUIS, Peter, Willem, NL-8271 PP Ijsselmuiden (NL)
(74) Representative: Grootscholten, Johannes A.M.
(86) International application number: PCT/NL2003/000266
(87) International publication number: WO 2003/086057

(56) References cited:
- EP-A- 0 432 148
- WO-A-01/15517
- WO-A-01/30134
- WO-A-92/06588
- US-A- 4 513 687

## Description

The present invention relates to a device for feeding livestock, comprising an upright and a feed trough on the upright, wherein the upright forms at least a part of a fence of a milking parlour, see e.g. document WO-A-01/30134.

Such a device is also known from the European patent application EP-A-0.432.148. The device is herein used as component of a milking parlour for the purpose of adjusting the length of the milking parlour. It is the intention here that, taking account of the size of a relevant animal for milking, the length of the milking parlour is adjusted such that substantially the location of the udder of the animal for milking is well known for the purpose of automatically connecting teat cups thereto. In the known device the whole upright with the feed trough thereon is arranged displaceably in the longitudinal direction of the milking parlour.

Such a configuration has a number of drawbacks.

Since the whole device must be reciprocally displaceable, i.e. the upright with the feed trough thereon, a heavy and robust drive is needed to displace the device. This is made worse in that an animal for milking which does not feel comfortable will push against the feed trough, and thereby against the upright or the fence. It will be apparent, particularly in the case of cows for milking, that such large animals can exert a considerable force on the fence, and thereby on the device according to the known art. In order to withstand these great forces, and because these forces must be absorbed by the drive, such a drive not only has to be heavy and robust in order to displace the whole assembly of the upright and the feed trough, but must take an even heavier and more robust form in order to be able to withstand the forces exerted by the animals for milking.

The present invention has for its object to provide a device of the above stated type, but with measures for obviating or at least relieving the above stated problems of devices according to the known art, for which purpose a device according to claim 1 is provided.

In such a configuration use is made according to the present invention of an ability of the feed trough to tilt. This is combined with a desired form of the bottom of the feed trough. This results in a positioning of only the feed in lengthwise direction of the milking parlour, so that an animal for milking will take up a position in the milking parlour substantially of its own accord, wherein the position of an udder of this animal for milking is well known, for instance close to a fence which is placed opposite the device according to the present invention and which defines a rear side of the milking parlour. In the event an animal were not to feel comfortable and were to attempt to break out of the milking parlour, all forces are absorbed by the stationary fence, which then forms the upright, in combination with the tilting point or the tilting points of the feed trough on the upright. There is no load on a drive or other substantially sensitive components of a device.

It is noted that, with an appropriately selected design of the bottom of the feed trough, a front of the feed trough can also be provided which is circular, wherein the tilting point or the tilting points in side view define the centre of the circular form. When an animal for milking then pushes forward against the feed trough, it is certain that only the tilting points of the feed trough are loaded. The forces generated herein are transferred directly into the stationary fence, which then forms the upright, so that a device is provided which is very robust and unaffected by restlessness among animals for milking. An exceptionally light drive can moreover be used for tilting of the feed trough. As a result of the thus achieved simplification relative to the known devices, the invention is therefore less susceptible to malfunction and can be realized at considerably lower cost. Nor do any heavy fences have to slide or be displaced reciprocally, a single tilting movement of the feed trough is sufficient to position an animal for milking at the desired location. Animals for milking will thus feel more at ease in a milking parlour with a device according to the present invention than if all kinds of adjustments had to be realized with a lot of noise when an animal for milking enters the milking parlour, or shortly before.

A device according to the invention preferably has the characteristics of claim 2. A drive for selective adjustment of the tilting position is necessary to bring about the desired tilting position of the feed trough. In such an embodiment the drive can comprise at least one pneumatic cylinder. This can then be connected on one side to the upright and on the other side to the feed trough connected tiltably to the upright. A pneumatic drive has the advantage that diverse components of a milking parlour are already pneumatically driven, such as the milking system itself, which operates on a vacuum to milk the animal with teat cups. Some degree of homogeneity can thus be provided in the diverse components and the techniques applied therein.

In a further preferred embodiment, a device according to the invention has the characteristics of claim 4. In such an embodiment the greatest effect is achieved when the trough is tilted and the animal for milking is herein positioned in the milking parlour.

A device according to the invention can have the characteristics of claim 5, since an arcuate shape is fairly simple to realize. It is noted that an arcuate shape does not per se have to be circular and that with a curved arc shape diverse areas along the bottom of the feed trough can thus be defined in line with the longitudinal direction of the milking parlour, where the feed for a relevant animal for milking will be situated in order to position this relevant animal in the desired manner in the milking parlour.

A device according to the invention can further have the characteristics of claim 6. Such a supply can be automated in order to effect the supply of feed.

A device according to the invention can further have the characteristics of claim 7. Such a control for operating the drive and the feed supply can have an operation adapted to each relevant animal.

A device according to the present invention can further comprise recognition means as defined in claim 8. The determined identification of an animal for milking can herein be used to set diverse parameters, such as the desired tilting position of the tiltable feed trough; the quantity of feed to be provided, and so on. The measures according to claim 9 can be taken for this purpose.

It is also noted that the present invention relates to a milking parlour with a fence having an upright and a feed trough according to any of claims 1-9. Since the positioning of the animals for milking in the milking parlour is one of the main objectives, together with providing a simplified configuration and a higher degree of comfort for the animals for milking, there is a strong relationship between the device according to the present invention per se and the application thereof in a milking parlour for milking livestock.

An embodiment of the present invention will be described in more detail hereinbelow, this description only being given by way of example and being formulated on the basis of the annexed drawings, wherein similar or the same components are designated with the same reference numerals and wherein:
fig. 1 shows a perspective view of a partly cut-away milking parlour with a device according to the present invention therein; and
fig. 2 shows a view comparable to fig. 1 with an animal for milking therein.

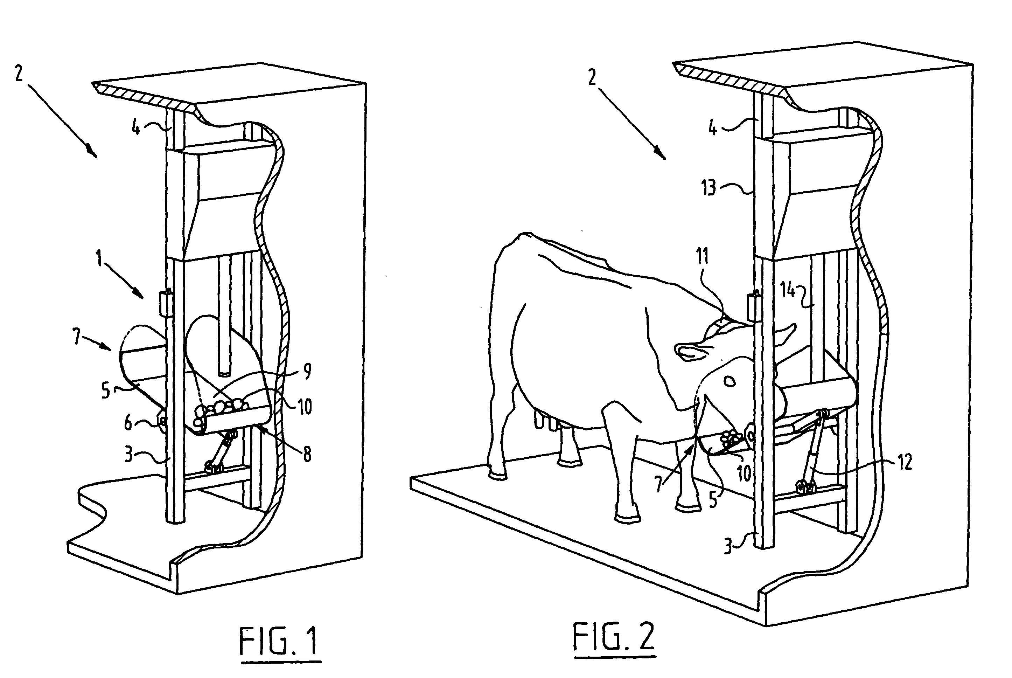

Fig. 1 shows a device 1 according to the present invention in a milking parlour 2, also according to the present invention. Device 1 comprises an upright 3, which is disposed in milking parlour 2 in stationary manner as a component of a fence 4. It is noted that the whole fence 4 can be deemed the upright 3, but this is not necessarily the case according to the present invention.

A feed trough 5 is arranged on upright 3. Feed trough 5 is suspended from tilting points 6 and is therefore tiltable relative to upright 3. On front side 7 and rear side 8 the feed trough 5 has curved shapes with an at least approximately flat bottom 9 therebetween.

When feed trough 5 is in the position shown in fig. 1, the feed 10 lies at the rear 8 of feed trough 5.

Assuming that a rear fence (not shown) is arranged in milking parlour 2 on the side opposite fence 4, the positioning of an udder of an animal for milking being desired relative to this rear fence, the milking parlour 2 with feed trough 5 in the position shown in fig. 1 will be particularly suitable for an animal of large dimensions in the longitudinal direction of milking parlour 2.

The opposite case is shown in fig. 2. In fig. 2 the feed trough 5 is tilted forward relative to the position shown in fig. 1. The feed herein lies at the front side 7 of feed trough 5. With feed trough 5 in the position shown in fig. 2, the effective length of milking parlour 2 between feed 10 and the rear fence (not shown) is thereby shortened relative to the situation shown in fig. 1.

In order to adjust the desired position of feed trough 5 in milking parlour 2, use can be made of recognition means, which are not shown and for instance react to a transponder in a collar 11 of an animal for milking or the like.

Using the data of the animal for milking, which come for instance from the transponder on the collar 11 of the animal for milking and are obtained with recognition means (not shown), a desired position of tiltable feed trough 5 can be determined which is specific to the relevant animal for milking, as can a desired quantity of feed.

The desired position is obtained by means of a pneumatic cylinder 12 for tilting the feed trough 5 on tilting points 6. The pneumatic cylinder is connected to a pump (not shown), which is controlled by a control (not shown), which is connected in turn to for instance the recognition means (not shown) for the purpose of setting the desired tilting position of the tiltable feed trough on the basis of the identity of the relevant animal for milking. The same applies for the supply of feed 10 to the feed trough. A container 13 is suspended for this purpose from fence 4 or upright 3 with a filling tube 14 to feed trough 5. Depending on the identity of the relevant animal for milking a quantity of feed associated with this relevant animal can be poured into feed trough 5 via filling tube 14. Container 13 is provided for this purpose with closing means (not shown), which are in turn controlled by the control (not shown).

Although a specific embodiment of the present invention has been considered in the immediately preceding part of the description, it will be apparent to the skilled person after examination of the foregoing that diverse modifications and changes are possible in the specifically described embodiment, without departing from the actual invention as defined in the appended claims, particularly in the independent claims relating to the device and the milking parlour. Feed troughs can thus be provided within the scope of the present invention with a form other than that shown and described above. The bottom of such a feed trough can for instance have a number of surfaces in the longitudinal direction of the milking parlour which run at an angle to each other. A segmented configuration of the bottom is thus realized in the lengthwise direction of the milking parlour. Use can be made of a drive other than a pneumatic cylinder to adjust the position of tiltable feed trough 5, for instance a hydraulic cylinder, more than one cylinder, a motorized mechanical drive, and so on. Furthermore, a milking parlour is preferably provided with an entrance and exit gate, which is not shown or described in the figures. In addition, such a milking parlour is preferably provided with an automated milking system, which can also be controlled by the above stated and not shown control. Use can be made of a transponder other than a transponder arranged on a collar, for instance an implanted transponder.

## Claims

1. Device for feeding livestock, comprising an upright (3) and a feed trough (5) on the upright (3), wherein the upright (3) forms at least a part of a fence (4) of a milking parlour, which fence (4) is disposed in stationary manner in the milking parlour and wherein the feed trough (5) is arranged tiltably around a tilting axis connected to the fence and stationary in the milk box on the upright (3) and comprises a bottom with a form which, for the purpose of positioning feed, is adapted to the tilting positions to be taken up by the feed trough (5), the tilting positions of the feeding trough (5) corresponding with feeding positions for smaller and larger animals.

2. Device as claimed in claim 1, wherein the feed trough (5) is coupled to a drive for selective adjustment of the tilting position of the feed trough.

3. Device as claimed in claim 2, wherein the drive comprises at least one pneumatic cylinder (12) which is connected on one side to the upright (3) and on the other side to the feed trough (5) connected tiltably to the upright (3).

4. Device as claimed in any of the foregoing claims, wherein the bottom of the feed trough (5) extends substantially transversely of the longitudinal direction of the upright (3).

5. Device as claimed in any of the foregoing claims, wherein the bottom of the feed trough (5) has an arcuate shape.

6. Device as claimed in any of the foregoing claims, wherein the tiltable feed trough (5) is connected to a feed supply for selective supply of feed into the feed trough.

7. Device as claimed in any of the foregoing claims, further comprising a control for operating the drive and the feed supply.

8. Device as claimed in any of the foregoing claims, further comprising recognition means for identification of a relevant animal of the livestock at the device.

9. Device as claimed in claims 7 and 8, wherein the control is connected to the recognition means for operating the drive and the feed supply on the basis of a finding of the recognition means concerning the identity of the relevant animal of the livestock.

10. Milking parlour with a fence having an upright (3) and a feed trough (5) as claimed in any of the foregoing claims.

## Patentansprüche

1. Vorrichtung zur Viehfütterung, umfassend einen Ständer (3) und einen Futtertrog (5) am Ständer (3), wobei der Ständer (3) wenigstens einen Teil eines Gatters (4) eines Melkstandes bildet, wobei das Gatter (4) feststehend in dem Melkstand angeordnet ist und wobei der Futtertrog (5) um eine mit dem Gatter verbundene Schwenkachse schwenkbar und in der Melkbox an dem Ständer (3) feststehend angeordnet ist und einen Boden umfasst, der eine Form hat, die zum Zwecke der Positionierung des Futters an die Schwenkpositionen, welche vom Futtertrog (5) eingenommen werden, angepasst ist, wobei die Schwenkpositionen des Futtertroges (5) mit den Fütterungspositionen von kleineren und größeren Tieren korrespondieren.

2. Vorrichtung nach Anspruch 1, wobei der Futtertrog (5) an einen Antrieb zur selektiven Anpassung der Schwenkposition des Futtertroges gekoppelt ist.

3. Vorrichtung nach Anspruch 2, wobei der Antrieb wenigstens einen pneumatischen Zylinder (12) umfasst, der an einer Seite mit dem Ständer (3) verbunden ist und auf einer anderen Seite mit dem Futtertrog (5), der schwenkbar mit dem Ständer (3) verbunden ist.

4. Vorrichtung nach einem der vorangehenden Ansprüche, wobei der Boden des Futtertroges (5) sich im Wesentlichen quer zur Längsrichtung des Ständers (3) erstreckt.

5. Vorrichtung nach einem der vorangehenden Ansprüche, wobei der Boden des Futtertroges (5) eine gekrümmte Form hat.

6. Vorrichtung nach einem der vorangehenden Ansprüche, wobei der schwenkbare Futtertrog (5) mit einer Futterzuführung zur selektiven Zufuhr von Futter in den Futtertrog verbunden ist.

7. Vorrichtung nach einem der vorangehenden Ansprüche, die ferner eine Steuerung zur Betätigung des Antriebs und der Futterzuführung umfasst.

8. Vorrichtung nach einem der vorangehenden Ansprüche, die ferner Wiedererkennungsmittel zur Identifikation eines betreffenden Tieres des Viehbestandes an der Vorrichtung umfasst.

9. Vorrichtung nach den Ansprüchen 7 und 8, wobei die Steuerung mit den Wiedererkennungsmitteln zur Betätigung des Antriebs und der Futterzuführung auf Basis einer Feststellung der Wiedererkennungsmittel bezüglich der Identität eines betreffenden Tieres aus dem Viehbestand verbunden ist.

10. Melkstand mit einem Gatter, der einen Ständer (3) und einen Futtertrog (5) nach einem der vorangehenden Ansprüche aufweist.

## Revendications

1. Dispositif d'alimentation du bétail comprenant une colonne (3) et un organe d'alimentation traversant (5) placé sur cette colonne (3), dans lequel la colonne (3) forme au moins une partie d'une barrière (4) d'une salle de traite, cette barrière (4) étant disposée de manière stationnaire dans la salle de traite et dans lequel l'organe d'alimentation traversant (5) est disposé de manière inclinable autour de l'axe d'inclinaison relié à la barrière et de manière stationnaire dans le box de traite sur la colonne (3) et comprenant un fond dont la forme est adaptée aux positions d'inclinaison devant être prises par l'organe d'alimentation traversant (5) afin de positionner l'organe d'alimentation, les positions d'inclinaison de l'organe d'alimentation traversant (5) correspondant aux positions d'alimentation d'animaux plus grands et plus petits.

2. Dispositif selon la revendication 1, dans lequel l'organe d'alimentation traversant (5) est couplé à une commande pour le réglage sélectif de la position d'inclinaison de l'organe d'alimentation traversant.

3. Dispositif selon la revendication 2, dans lequel la commande comprend au moins un vérin pneumatique (12) relié d'un côté à la colonne (3) et de l'autre à l'organe d'alimentation traversant (5) relié de manière inclinable à la colonne (3).

4. Dispositif selon l'une quelconque des revendications précédentes, dans lequel le fond de l'organe d'alimentation traversant (5) s'étend essentiellement à la transversale de la direction longitudinale de la colonne (3).

5. Dispositif selon l'une quelconque des revendications précédentes, dans lequel le fond de l'organe d'alimentation traversant (5) présente une forme arquée.

6. Dispositif selon l'une quelconque des revendications précédentes, **caractérisé en ce que** l'organe d'alimentation traversant inclinable (5) est relié à un apport de nourriture pour un apport de nourriture sélectif dans l'organe d'alimentation traversant.

7. Dispositif selon l'une quelconque des revendications précédentes comprenant de plus une commande pour actionner la commande et l'apport de nourriture.

8. Dispositif selon l'une quelconque des revendications précédentes comprenant de plus des moyens de reconnaissance pour l'identification d'un animal pertinent du bétail sur le dispositif.

9. Dispositif selon les revendications 7 et 8, dans lequel la commande est reliée aux moyens de reconnaissance pour le fonctionnement de la commande et de l'apport de nourriture sur la base d'un résultat des moyens de reconnaissance concernant l'identité de l'animal pertinent du bétail.

10. Salle de traite dotée d'une barrière ayant une colonne (3) et un organe d'alimentation traversant (5) suivant l'une quelconque des revendications précédentes.
